# EUROPÄISCHE PATENTSCHRIFT

(11) **EP 4 003 025 B1**
(45) Veröffentlichungstag und Bekanntmachung des Hinweises auf die Patenterteilung: **17.04.2024**
(21) Anmeldenummer: 20750566.0
(22) Anmeldetag: 24.07.2020
(51) Int. Cl.: A21C 9/04

(54) **VORRICHTUNG ZUM AUFBRINGEN VON STREUGUT**
DEVICE FOR THE APPLICATION OF SPREADING MATERIAL
DISPOSITIF POUR L'APPLICATION DE MATÉRIAU D'ÉPANDAGE

(30) Priorität: 26.07.2019 AT 506812019
(43) Veröffentlichungstag der Anmeldung: 01.06.2022
(73) Patentinhaber: KÖNIG MASCHINEN GESELLSCHAFT M.B.H., 8045 Graz (AT)
(72) Erfinder: PALZER, Thomas, 8121 Deutschfeistritz (AT); RIEGER, Thomas, 8501 Lieboch (AT); THOMASSER, Peter, 8200 Gleisdorf (AT)
(74) Vertreter: Wildhack & Jellinek Patentanwälte
(86) Internationale Anmeldenummer: PCT/AT2020/060276
(87) Internationale Veröffentlichungsnummer: WO 2021/016643

(56) Entgegenhaltungen:
- GB-A- 2 099 276
- US-A- 1 711 716
- US-A- 5 195 454
- US-A1- 2001 003 260
- US-B1- 6 295 947

## Beschreibung

Die Erfindung betrifft eine Vorrichtung zum Aufbringen von Schütt- oder Streugut auf Backwaren bzw. Teigstücke gemäß dem Oberbegriff des Patentanspruchs 1 und eine Teiganlage bzw. eine Anlage für Backwaren umfassend eine solche Vorrichtung.

Aus dem Stand der Technik sind Vorrichtungen zum Bestreuen von Backwaren bzw. Teigstücken bekannt. Diese Vorrichtungen weisen üblicherweise einen sehr großen Reinigungsaufwand und einen großen Platzbedarf auf. Zumeist wird das Schütt - oder Streugut von oben auf die Backwaren bzw. Teigstücke aufgebracht. Durch das Aufstreuen des Schütt- oder Streuguts kommt es zu einem Verspringen des Schütt- oder Streuguts, wodurch ein sehr hoher Reinigungsaufwand und Verlust von Schütt- oder Streugut entsteht. Zudem ist es notwendig, die Teigstücke bzw. Backwaren vorab zu befeuchten, um ein Anhaften des Streuguts an den Backwaren bzw. Teigstücke zu ermöglichen. Es ist notwendig, die Backwaren bzw. Teigstücke gleichmäßig zu befeuchten, um ein gleichmäßiges Anhaften des Schütt- oder Streuguts zu erreichen, wobei dazu ein Überschuss an Wasser notwendig ist, der nach der Bestreuung auf folgende Anlagekomponenten verschleppt wird, was sowohl für die Handhabung der Anlage als auch für die Reinigung problematisch ist.

Auch überschüssiges Schütt- oder Streugut, das lediglich auf den Backwaren bzw. Teigstücken aufliegt, jedoch nicht an den Teigstücken haftet, wird in nachfolgende Anlagekomponenten verschleppt. Dies ist vor allem dann problematisch, wenn zwischen verschiedenen Schütt- oder Streugutarten gewechselt wird, da es in diesem Fall zu einer unerwünschten Vermischung des unterschiedlichen Schütt- oder Streugutes kommen kann. Durch das Verspringen und die Verschleppung des Schütt- oder Streuguts wird die Reinigung der Anlagenteile wieder wesentlich erschwert und die Menge des als Abfall nicht weiter verwendbaren Schütt-oder Streuguts erhöht.

US1711716 A offenbart eine Vorrichtung zum Aufbringen von Schütt- oder Streugut nach dem Stand der Technik.

Die Aufgabe der Erfindung ist es daher eine Vorrichtung zum Bestreuen von Backwaren bzw. Teigstücken bereitzustellen, die einen geringen Platzbedarf aufweist, den Reinigungsaufwand minimiert und eine gleichmäßige bzw. gezielte, Verteilung des Schütt-oder Streuguts auf den Backwaren bzw. Teigstücken ermöglicht.

Die Erfindung löst die Aufgabe mit dem kennzeichnenden Merkmal des Patentanspruchs 1.

Für eine Vorrichtung zum Aufbringen von Schütt- oder Streugut, insbesondere von für Backwaren relevantem Schütt- und Streugut wie Mohn, Sesam, Sonnenblumenkerne, Kürbiskerne, Haferflocken, Getreidegriese, Getreideschrotte, geriebener Käse etc., auf die Unterseite von Backwaren bzw. Teigstücken umfassend
- ein Belegband zum Transport der Backwaren/Teigstücke von einer Teigübernahme zu einer Teigabgabe, wobei an der Teigübernahme auf deren Unterseite unbestreute Backwaren bzw.Teigstücke auf das Belegband übernehmbar sind und an der Teigabgabe auf deren Unterseite bestreute Backwaren bzw. Teigstücke von dem Belegband abgebbar sind, wobei die Backwaren bzw. Teigstücke in einer Transportebene des Belegbandes von der Teigübernahme zur Teigabgabe transportierbar sind und wobei das Belegband in einer Rückführebene unterhalb der Teigtransportebene des Belegbandes wieder zur Teigübernahme geführt ist,
- eine Streuguteinheit zur Aufnahme und Aufbringung des Schütt- oder Streuguts, die unterhalb der Transportebene angeordnet ist,
- ein Transportband, wobei das Transportband abschnittsweise unter der Schütt- oder Streuguteinheit angeordnet ist und wobei durch die Schütt- Streuguteinheit Schütt-Streugut auf das Transportband aufbringbar ist,
ist erfindungsgemäß vorgesehen, dass die Schütt- oder Streuguteinheit derart unterhalb der Transportebene angeordnet ist, dass überschüssiges Schütt- oder Streugut welches nicht von den Teigstücken aufgenommen wurde am Ende der Transportebene vom Belegband in die Streuguteinheit abrieselt, und dass zwischen der Rückführebene und der Transportebene des Belegbandes das Belegband und das Transportband in einem Übertragungsbereich derart in einem, insbesondere verstellbaren, Abstand zueinander oder aneinander anliegend angeordnet sind, dass Schütt- oder Streugut zwischen dem Belegband und dem Transportband klemmbar und im Übertragungsbereich vom Transportband auf das Belegband übertragbar ist, wobei das Transportband im Übertragungsbereich dem Verlauf des Belegbandes folgend, insbesondere in Bezug auf die Rückführung des Belegbandes außenliegend, angeordnet ist.

Die erfindungsgemäße Vorrichtung ermöglicht einen besonders kompakten Aufbau, die Reinigung wird wesentlich vereinfacht und zusätzlich wird eine gezielte Auftragung von Schütt - Streugut auf Backware/Teigstücke ermöglicht.

Die erfindungsgemäße Anordnung macht es möglich, dass für einen automatisierten Betrieb keine Rückführeinheit zur Rückführung des Schütt- oder Streugutes erforderlich ist. Bei bekannten Anlagen, die eine Weiterverwendung des überschüssigen Streugutes vorsehen, wird eine Rückführeinheit mit Vakuum, Gebläse, Schneckenfördereinheit und/ oder Förderbändern notwendig. Die Reinigung solcher Rückführeinheiten ist schwierig, da das Reinigen von Schläuchen, Ventilen, Pumpen, Schneckenfördereinrichtungen, Bandfördereinheiten, Gebläse etc. häufig nur unzureichend möglich ist und enorme Kosten verursacht.

Durch den Wegfall der Schütt- oder Streugut-Rückführeinheit entfällt der hohe Energieeinsatz und der Reinigungsaufwand der für bekannte Rückführungen notwendig ist zur Gänze. Wenn die Schütt-oder Streuguteinheit daher so angeordnet ist, dass das Schütt- und Streugut, das vom Belegband abrieselt direkt der Schwerkraft folgend in die Schütt- oder Streugut gelangt, kann eine kompakte, leicht zu reinigende, energie- und kosteneffiziente Vorrichtung bereitgestellte werden.

Durch die erfindungsgemäße Anordnung ist weiters eine deutliche Platzeinsparung möglich. Das Transportband und das Belegband sind teilweise übereinander angeordnet, sodass Platz eingespart werden kann. Im Übertragungsbereich sind das Transportband und das Belegband derart angeordnet sind, dass Schütt - Streugut entgegen der Schwerkraftrichtung nach oben transportierbar ist. Dadurch, dass das Streugut im Übertragungsbereich zwischen Transportband und Belegband geklemmt wird, bleibt das Streumuster erhalten und eine gezielte und gleichmäßige Bestreuung kann erreicht werden, wobei das Streugut nach dem Übertragungsbereich auf dem Belegband weitertransportiert wird. Der Abstand zwischen Belegband und Transportband ist vor und nach dem Übertragungsbereich größer, als im Übertragungsbereich. Insbesondere für die Aufbringung von unterschiedlichem Schütt - oder Streugut kann vorgesehen sein, dass im Übertragungsbereich der Abstand zwischen dem Belegband und dem Transportband einstellbar ist, so dass der Abstand an die Korngröße des aktuell verwendeten Streuguts angepasst werden kann, wodurch das Schütt - Streugut besonders schonend geklemmt werden kann.

Vorteilhafte Ausgestaltungen ergeben sich durch die folgenden Merkmale:
Um eine besonders gezielte Bestreuung zu erreichen, kann vorgesehen sein, dass das Belegband am oberen Endpunkt des Übertragungsbereichs eine Steigung von maximal 60°, insbesondere von 0° bis 30°, vorzugsweise von 0° bis 10°, aufweist. Dadurch wird ein Verrutschen des Schütt - oder Streuguts auf dem Belegband vermieden. Die Steigung wird als der Winkel angegeben, den das Belegband in dem auf den Übertragungsbereich in Laufrichtung des Belegbands folgenden Bereich mit der Horizontalen einschließt.

Um eine besonders schonende Übergabe bei geringem Platzbedarf zu ermöglichen, kann vorgesehen sein, dass im Übertragungsbereich das Belegband und das Transportband jeweils in einem gemeinsamen Bogen geführt sind. Dabei ist der Radius des vom Belegband beschriebenen Bogens kleiner oder gleich dem Radius des vom Transportband beschriebenen Bogens.

Eine besonders gleichmäßige Verteilung des Schütt- oder Streuguts kann erreicht werden, wenn im Übertragungsbereich das Belegband und das Transportband jeweils in einem Kreisbogen geführt sind. Dabei kann vorgesehen ist, dass die von Belegband und Transportband beschriebenen Kreisbögen den selben Mittelpunkt und einen gemeinsamen Mittelpunktswinkel von zumindest 90°, vorzugsweise zumindest 170°, aufweisen. Auf diese Weise kann das Schütt- oder Streugut besonders einfach geklemmt werden und das Schütt- oder Streugut kann besonders gezielt vom Transportband auf das Belegband übertragen werden.

Bei unterschiedlichen Radien der Kreisbögen entspricht der Abstand zwischen dem Belegband und dem Transportband der Breite des Kreisrings.

Weiters kann vorgesehen sein, dass das Belegband abschnittsweise, insbesondere zumindest im Übertragungsbereich, um eine Trommel verlaufend angeordnet ist, wobei der Umfang der Trommel den vom Belegband beschriebenen Kreisbogen vorgibt. Dadurch kann auf konstruktiv vorteilhafte Weise eine exakte Führung des Belegbandes im Übertragungsbereich bereitgestellt werden, sodass eine gezielte Übergabe des Schütt-oder Streuguts möglich ist und ein Verspringen des Schütt- oder Streuguts kann noch besser vermieden werden. Insbesondere kann die Trommel einen Durchmesser aufweisen, der es ermöglicht, dass im Übertragungsbereich ein Großteil der Höhendifferenz zwischen dem unter der Streuguteinheit angeordneten Abschnitt des Transportbandes und der Teigübernahme überwunden werden kann.

Weiters kann vorgesehen sein, dass der Umschlingungswinkel des Belegbands um die Trommel zumindest 180° beträgt. Dadurch ist eine kompakte Bauweise möglich, die es erlaubt, das Belegband lediglich über zwei Umlenkungen zu führen, sodass die Reinigung vereinfacht wird. Insbesondere kann der Umschlingungswinkel zumindest 200° betragen. Die Umlenkungen, um die das Belegband geführt ist, weisen dabei einen unterschiedlichen Durchmesser auf, sodass einerseits der Übertragungsbereich möglichst groß wird um eine genaue Übertragung des Schütt- oder Streuguts zu ermöglichen, andererseits der Platzbedarf des Belegbandes möglichst gering ist, um eine kompakte Bauweise zu ermöglichen. Beispielsweise kann dadurch eine zumindest teilweise Anordnung der Schütt- oder Streuguteinheit unterhalb der Teigabgabe erreicht werden, die einen besonders kompakten Aufbau der Vorrichtung unterstützt.

Ein besonders kompakter Aufbau der Vorrichtung wird ermöglicht, wenn der Durchmesser der Trommel zumindest der Höhe der Streuguteinheit entspricht. Da die Streuguteinheit aufgrund ihrer Funktion eine gewisse Bauhöhe aufweist, ist es notwendig das Schütt-oder Streuguts von der Höhe der Auftragung auf das Transportband auf die Höhe der Teigübernahme zu transportieren, wobei dies im Übertragungsbereich durch die Trommel ermöglicht werden kann.

Eine besonders stabile und kompakte Gestaltung der Vorrichtung kann erreicht werden, wenn die Trommel als Antriebstrommel des Belegbands ausgebildet ist.

Um eine exakte Führung des Transportbandes im Übertragungsbereich zu ermöglichen, kann vorgesehen sein, dass das Transportband im Übertragungsbereich über Umlenkrollen geführt ist, wobei die Umlenkrollen eine entgegengesetzte Laufrichtung zum Belegband, insbesondere zur Trommel des Belegbandes, aufweisen. Insbesondere kann vorgesehen sein, dass die Umlenkrollen derart angeordnet sind, dass das Transportband im Bogen, insbesondere im Kreisbogen, geführt ist. Dadurch kann ein exakter Transport des Schütt- oder Streuguts erreicht werden. Die Übergabe des Schütt- oder Streuguts kann besonders schonend erfolgen, wenn die Laufgeschwindigkeit des Transportbandes der Laufgeschwindigkeit des Belegbandes entspricht. Das Schütt- oder Streugut wird dabei so gezielt transportiert, dass eine besonders gezielte, z.b. gleichmäßige, Bestreuung erfolgen kann.

Um eine schonende Übergabe der Teigstücke zu ermöglichen, kann das Transportband in Laufrichtung des Transportbands am Ende des Übertragungsbereichs über eine als Messerkante ausgeführte Umlenkrolle geführt sein. Es ist durch die Messerkante möglich, die Übernahme der Teigstücke mit einem minimalen Übergabewinkel zu ermöglichen. Der Übergabewinkel kann zusätzlich reduziert werden, wenn das Belegband eine leichte Steigung aufweist. Durch die Ausführung der letzten Umlenkrolle im Übertragungsbereich als Messerkante, kann zudem der Übergabebereich von einer vorgeschalteten Anlagekomponente besonders kurz gehalten werden, sodass ein kompakter Aufbau der Vorrichtung ermöglicht wird. Weiters kann die Reinigung des Transportbandes erleichtert werden, wenn das Transportband in Laufrichtung des Transportbandes am Ende des Übertragungsbereichs eine Messerkante aufweist oder eine angeordnete Umlenkrolle umfasst, wobei die Messerkante oder die Umlenkrolle derart auf einer schwenkbaren Lagerung angeordnet sind, dass das Transportband durch Verschwenken der Umlenkrolle entspannbar ist.

Um einen besonders kompakten Aufbau der Vorrichtung zu ermöglichen, kann vorgesehen sein, dass das Belegband an der Teigabgabe über eine Belegbandumlenkrolle geführt ist. Durch diese Anordnung kann überschüssiges Schütt-oder Streugut ohne zusätzlichen Energieaufwand unter Ausnutzung der Schwerkraft wieder in die Streuguteinheit zurückgeführt werden. Um ein Verschleppen von Streugut innerhalb der Vorrichtung einfach vermeiden zu können, kann vorgesehen sein, dass in Laufrichtung des Belegbands nach der Belegbandumlenkrolle ein Streugutabstreifer vorgesehen ist, so dass überschüssiges Schütt- oder Streugut vom Belegband in die Streuguteinheit einbringbar ist.

Der Energieaufwand kann auch dadurch gering gehalten werden, dass vorgesehen ist, dass die Schütt- oder Streuguteinheit einen Schütt- oder Streugutbehälter zur Aufnahme des aufzubringenden Schütt- oder Streuguts umfasst und eine in Schwerkraftrichtung unter dem Schütt- oder Streugutbehälter angeordnete Streueinrichtung zum Aufbringen des Schütt- oder Streuguts umfasst. Dadurch kann zudem der Aufbau sehr kompakt gestaltet werden.

Um ein Verschleppen von Streugut zu vermeiden, kann weiters vorgesehen sein, dass eine weitere Transporteinheit vorgesehen ist, die derart angeordnet ist, dass an der Teigabgabe Teigstücke vom Belegband an die weitere Transporteinheit abgebbar sind, wobei insbesondere vorgesehen ist, dass zwischen dem Belegband und der weiteren Transporteinheit ein Zwischenraum vorgesehen ist, der derart ausgebildet ist, dass auf dem Belegband befindliches Schütt- oder Streugut durch den Zwischenraum zwischen Belegband und weiterer Transporteinheit transportierbar ist.

Um ein Verschleppen von Schütt- oder Streugut noch besser verhindern zu können, kann vorgesehen sein, dass die Vorrichtung, insbesondere als weitere Transporteinheit, eine Abrieseleinheit zur Befreiung der Teigstücke von schlechthaftendem Streugut aufweist, wobei an der Teigabgabe die Teigstücke von dem Belegband an die Abrieseleinheit abgebbar sind, wobei die Abrieseleinheit derart ausgebildet ist, dass schlechthaftendes Streugut entfernbar ist, und wobei insbesondere vorgesehen ist, dass entferntes Schütt-oder Streugut in die Streuguteinheit einbringbar ist. Als Abrieseleinheit kann insbesondere ein Gitterband vorgesehen sein. Dadurch kann überschüssiges Schütt- oder Streugut effektiv entfernt werden.

Es kann vorgesehen sein, dass zwischen Teigübernahme und Teigabgabe über dem Belegband eine Druckrolle so angeordnet ist, dass durch die Druckrolle auf dem Belegband befindliche Teigstücke auf das Schütt- oder Streugut andrückbar sind, wobei insbesondere vorgesehen ist, dass der Abstand zwischen Druckrolle und Belegband einstellbar ist. Das Schütt- oder Streugut kann dadurch tiefer in die Teigstücke eingedrückt werden und dadurch besser auf den Teigstücken festgehalten werden. Auf diese Weise kann eine besonders gleichmäßigere und satte Bestreuung erzielt werden. Weiters kann z.T. auf ein vorheriges Befeuchten der Teigstücke verzichtet werden, sodass die Reinigung der Vorrichtung vereinfacht wird.

Um eine besonders einfache Reinigung zu ermöglichen, kann eine einseitig fliegende Lagerung der Transporteinheiten vorgesehen sein. Es kann dabei entweder für das Belegband, das Transportband oder die Abrieseleinheit eine solche Lagerung vorgesehen sein, oder auch für mehrere oder alle diese Bauteile. Dabei kann vorzugsweise vorgesehen sein, dass alle Lager auf der gleichen Seite der Vorrichtung, insbesondere in Laufrichtung des Belegbandes neben der Vorrichtung, angeordnet sind, um die Reinigung besonders einfach zu gestalten. Es kann weiters die Lagerung auf einem abziehbaren Dorn ausgebildet ist. So wird eine besonders stabile Lagerung erreicht, die dennoch eine einfache Reinigung ermöglicht.

Um die Reinigung des Transportbandes noch einfacher zu gestalten, kann vorgesehen sein, dass das Transportband auf einem Rahmen angeordnet ist, wobei der Rahmen so gelagert ist, dass er aus der Vorrichtung, insbesondere quer zur Laufrichtung des Belegbandes, entfernbar ist. Auch die Reinigung der übrigen Bauteile kann so erleichtert werden. Zum Entfernen des Rahmens aus der Vorrichtung kann vorgesehen sein, dass der Rahmen Schwenkräder aufweist. Dadurch kann ein Verschieben des Rahmens normal zur Laufrichtung des Transportbandes ermöglicht werden.

Erfindungsgemäß ist auch eine Teiganlage mit zumindest einer zuvor beschriebenen Vorrichtung. Durch die kompakte Bauweise der Vorrichtung kann der Platzbedarf einer Teiganlage deutlich reduziert werden.

Dabei kann vorgesehen sein, dass die Teiganlage eine Bestreuungseinrichtung zum Bestreuen von oben umfasst, die derart angeordnet ist, dass Teigstücke wendungsfrei beidseitig bestreubar sind. Das Wenden der Teigstücke ist vor allem bei empfindlichen Teigstücken mit Schwierigkeiten verbunden, da die Formgebung der Teigstücke beim Wenden erhalten bleiben muss. Diese Schwierigkeiten können durch eine erfindungsgemäße Anordnung überwunden werden

Alternativ oder zusätzlich kann vorgesehen werden, dass zum beidseitigen Bestreuen von Teigstücken die Teiganlage zwei zuvor beschriebene Vorrichtungen umfasst, wobei die Vorrichtungen derart angeordnet sind, dass zwischen den Vorrichtungen eine Wendung der Teigstücke vorgesehen ist. Dadurch wird ein besonders kompakter Anlagenbau ermöglicht.

Eine besonders vorteilhafte Ausführungsform der Erfindung ist anhand der folgenden Zeichnungen ohne Einschränkung des allgemeinen erfinderischen Gedankens beispielhaft dargestellt.
Fig. 1 zeigt eine beispielhafte Vorrichtung in Kombination mit einer Bestreuungseinrichtung von oben, wobei die Anordnung im Querschnitt zu sehen ist.
Fig. 2 zeigt die Anordnung aus Fig. 1 in Seitenansicht.
Fig. 3 zeigt die Anordnung aus Fig. 1 in Draufsicht.
Fig. 4 zeigt eine beispielhafte Vorrichtung aus einer ersten Schrägansicht.
Fig. 5 zeigt die Vorrichtung aus Fig. 4 aus einer zweiten Schrägansicht.
Fig. 6 zeigt die Vorrichtung aus Fig. 4 in einer Seitenansicht.
Fig. 7 zeigt die Vorrichtung aus Fig. 4 in Draufsicht.
Fig. 8 zeigt die Vorrichtung aus Fig. 4, wobei der Rahmen und das Transportband entfernt wurden.
Fig. 9 zeigt eine erste Schrägansicht der Anordnung aus Fig. 8.
Fig. 10 zeigt eine zweite Schrägansicht der Anordnung aus Fig. 8.
Fig. 11 zeigt für die Anordnung aus Fig. 4 das Transportband auf einem verschiebbaren Rahmen.
Fig. 12 zeigt die Anordnung aus Fig. 11 in einer Schrägansicht.
Fig. 13 zeigt die Anordnung aus Fig. 11 von der Rückseite.
Fig. 14 zeigt die Anordnung aus Fig. 11 in einer Seitenansicht.
Fig. 15 zeigt für die Anordnung aus Fig. 11 einen Schnitt entlang der Achse A-A (Fig. 16).
Fig. 16 zeigt die Anordnung aus Fig. 11 von oben.
Fig. 17 zeigt das Transportband der Anordnung aus Fig. 4.
Fig. 18 zeigt das Transportband aus Fig. 17 von oben.
Fig. 19 zeigt das Transportband aus Fig. 17 in einer ersten Schrägansicht.
Fig. 20 zeigt das Transportband aus Fig. 17 in einer zweiten Schrägansicht.
Fig. 21 zeigt das Transportband aus Fig. 17 in entspanntem Zustand.
Fig. 22 zeigt das Transportband aus Fig. 17 in entspanntem Zustand von oben.
Fig. 23 zeigt das Transportband aus Fig. 17 in entspanntem Zustand in einer ersten Seitenansicht.
Fig. 24 zeigt das Transportband aus Fig. 17 in entspanntem Zustand in einer zweiten Seitenansicht.

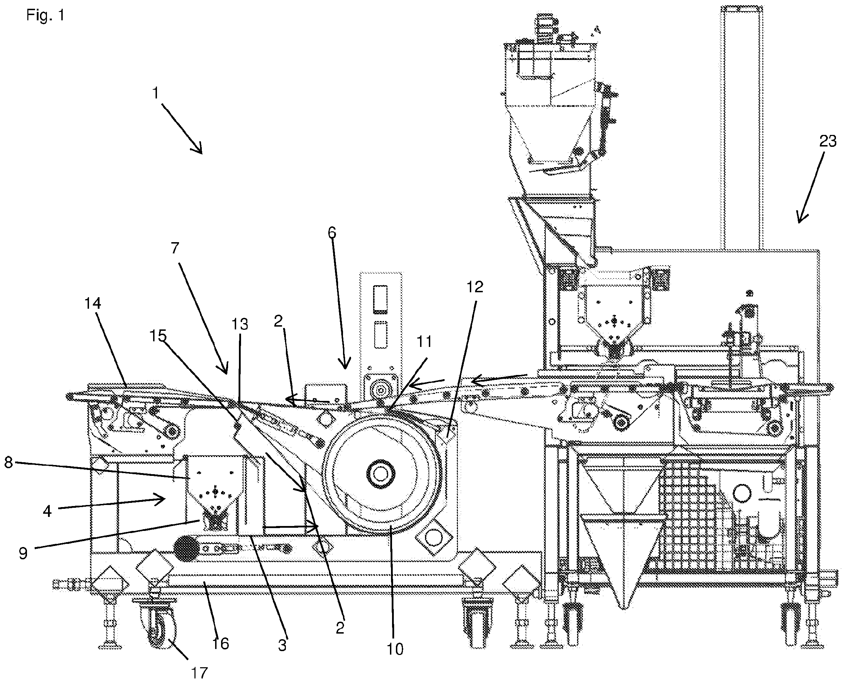

In Fig. 1 ist eine Kombination aus einer erfindungsgemäßen Vorrichtung 1 und einer Bestreuungseinrichtung 23 zur Bestreuung von oben gezeigt. Dadurch ist ein wendungsfreies beidseitiges Bestreuen von Teigstücken möglich. Die erfindungsgemäße Vorrichtung 1 umfasst ein Belegband 2, ein Transportband 3 und eine Streuguteinheit 4. Das Belegband 2 und das Transportband 3 sind Bandförderer bzw. Förderbänder, die in der dargestellten Ausführungsform endlos verschweißt sind. Sie können vorteilhafterweise als elastisches Gummiband oder als Gewebeband mit glatter oder strukturierter Oberfläche oder mit elastischer oder weicher Beschichtung ausgeführt sein.

Das Belegband 2 ist um eine Trommel 10 und um eine Belegbandumlenkrolle 13 geführt. Das Obertrum des Belegbands 2 verläuft von der Trommel 10 zur Belegbandumlenkrolle 13 und legt die Transportebene fest. Das Untertrum des Belegbands 2 verläuft von der Belegbandumlenkrolle 13 zur Trommel 10 und legt die Rückführebene fest. Zwischen der Rückführebene und der Transportebene ist ein Übertragungsbereich 5 vorgesehen, in dem in Bezug auf die Rückführung des Belegbandes 2 das Transportband 3 außenliegend angeordnet ist.

Dabei ist ein Abschnitt des Transportbandes 3 benachbart zum Belegband 2 dem Verlauf der Trommel 10 folgend angeordnet, wobei der Abstand zwischen Transportband 3 und Belegband 2 einheitlich ist. Vor und nach dem Übertragungsbereich 5 ist der Abstand zwischen Transportband 3 und Belegband 2 größer als im Übertragungsbereich 5. Im Übertragungsbereich 5 ist das Belegband 2 und das Transportband 3 in einem gemeinsamen Bogen geführt, wobei das Belegband 2 und das Transportband 3 jeweils in einem Kreisbogen zum gleichen Mittelpunkt angeordnet sind, und wobei der Abstand zwischen dem Belegband 2 und dem Transportband 3 der Breite des zugehörigen Kreisringes entspricht. Streugut wird auf dem Transportband 3 zum Übertagungsbereich 5 transportiert und im Übertragungsbereich 5 zwischen Transportband 3 und Belegband 2 geklemmt und nach oben transportiert. Dabei wird das Streugut vom Transportband 3 auf das Belegband 2 übertragen. Am oberen Endpunkt des Übertragungsbereichs 5 weist das Belegband 2 eine Steigung von 5° auf. In der dargestellten Ausführungsform weist die Transportebene, bzw. das Obertrum des Belegbandes 2, generell eine Steigung von 5° auf.

In Laufrichtung des Belegbandes 2 nach dem Übertragungsbereich 5 werden die zu bestreuenden Teigstücke auf das Belegband 2 übernommen. Die Teigstücke werden durch das Belegband 2 in der Transportebene von der Teigübernahme 6 zu einer Teigabgabe 7 transportiert. An der Teigabgabe 7 verläuft das Belegband 2 über die Belegbandumlenkrolle 13. Dort werden die Teigstücke vom Belegband 2 abgegeben.

Überschüssiges Schütt- oder Streugut fällt der Schwerkraft folgend vom Belegband 2 ab. Dieses überschüssige Schütt- oder Streugut wird von der Streuguteinheit 4 aufgefangen, da die Streuguteinheit 4 unterhalb der Transportebene angeordnet ist. In der dargestellten Ausführungsform ist die Streuguteinheit 4 teilweise unterhalb der Belegbandumlenkrolle 13 angeordnet. Die Streuguteinheit 4 ist zur Aufnahme und zur Aufbringung des Schütt-oder Streuguts geeignet. Das Transportband 3 verläuft in einem Abschnitt der in Laufrichtung des Transportbandes 3 vor dem Übertragungsbereich 5 angeordnet ist, unter der Streuguteinheit 4. In diesem Abschnitt wird Streugut von der Streuguteinheit 4 auf das Transportband 3 aufgebracht.

In der dargestellten Ausführungsform ist die Streuguteinheit 4 auf einer Grundeinheit der Vorrichtung 1 angebracht. Die Streueinheit 4 weist einen Streugutbehälter 8 und eine unterhalb des Streugutbehälters 8 angeordnete Streueinrichtung 9 auf. Der Streugutbehälter 8 ist geeignet, das aufzutragende Schütt- oder Streugut aufzunehmen. In der dargestellten Ausführungsform ist der Streugutbehälter 8 aus der Streueinheit 4 ausziehbar. Um verbrauchtes Schütt- oder Streugut nachzufüllen, kann beispielsweise eine Schneckenförderung vorgesehen sein, die Streugut aus einem Lagerbehälter in den Streugutbehälter 8 fördert. Die Streueinrichtung 9 dient zum Auftragen des Schütt- oder Streuguts aus dem Streugutbehälter 8 auf das Transportband 3.

Das Schütt- oder Streugut wird von der Streueinrichtung 9 auf den Aufnahmebereich des Transportbands 3 aufgebracht bzw. von oben aus der Streueinrichtung 9 auf das Transportband 3 aufgestreut. Es kann dabei eine minimale Fallhöhe des Schütt- oder Streuguts erreicht werden, die ein Verspringen des Schütt- oder Streuguts bei der Auftragung auf das Transportband 3 weitestgehend vermeidet. Das Streugut wird im Übertragungsbereich 5 vom Transportband 3 auf das Belegband 2 übertragen und vom Belegband 2 zur Teigabgabe 7 transportiert. In der dargestellten Ausführungsform ist der Streugutbehälter 8 unterhalb der Belegbandumlenkrolle 13 angeordnet. Schütt- oder Streugut, das an der Belegbandumlenkrolle 13 vom Belegband 2 abfällt, gelangt der Schwerkraft folgend, in den Streugutbehälter 8 und kann im Streugutbehälter 8 aufgefangen werden und kann so weiterverwendet werden.

Die Teigstücke werden an der Teigübernahme 6 übernommen, wobei vorzugsweise auf der Unterseite unbestreut Teigstücke auf das Belegband 2 übernommen werden. In der dargestellten Ausführungsform ist zwischen der vorgelagerten Bestreuungseinrichtung 23 zur Bestreuung von oben und der Vorrichtung 1 eine Übergabenase angeordnet. Diese ermöglicht eine wendungsfreie und schonende Übergabe von Teigstücken. In der dargestellten Ausführungsform kann die Übernahmenase oberhalb der Trommel 10 angeordnet werden. Durch diese Anordnung ist eine kompakte Bauweise der Vorrichtung 1 möglich, während gleichzeitig eine schonende Behandlung der Teigstücke ermöglicht wird.

Die Teigstücke kommen auf dem Schütt- oder Streugut, das sich bereits auf dem Belegband 2 befindet, zu liegen. Das Streugut wird dabei durch das Eigengewicht der Teigstücke in die Teigstücke gedrückt und bleibt an diesen haften. Abhängig von den Eigenschaften des Teiges kann dabei auf ein vorheriges Befeuchten der Teigstücke vorgesehen sein oder auf dieses verzichtet werden. Um das Anhaften des Schütt- oder Streuguts zu verbessern, kann vorgesehen werden, dass über dem Belegband 2 eine nicht dargestellte Druckrolle angeordnet ist. Durch diese Druckrolle kann das Schütt- oder Streugut tiefer in die Teigstücke gedrückt werden und haftet dadurch noch besser.

In der dargestellten Ausführungsform werden die an der Unterseite bestreuten Teigstücke an der Teigabgabe 7 an eine weitere Transporteinheit 14 übergeben. Die weitere Transporteinheit 14 ist als Abrieseleinheit bzw. als Gitterband ausgeführt. Schütt- oder Streugut, das nicht an den Teigstücken haftet und also überschüssig ist, wird an der Teigabgabe 7 nicht an die weitere Transporteinheit 14 übergeben, sondern fällt vom Belegband 2 ab. Dabei gelangt das Schütt- oder Streugut direkt in den Streugutbehälter 8, der unter der Teigabgabe 7 angeordnet ist.

Um zu verhindern, dass Schütt- oder Streugut mit dem Belegband 2 innerhalb der Vorrichtung 1 verschleppt werden kann, ist ein Streugutabstreifer 15 vorgesehen, der in Laufrichtung des Belegbands 2 nach der Belegbandumlenkrolle 13 angeordnet ist. Der Streugutabstreifer 15 ist mehrteilig aufgebaut, um zumindest teilweise entfernbar zu sein und eine einfache Reinigung zu ermöglichen. Alternativ kann beispielsweise auch ein einteiliger entfernbarer Streugutabstreifer 15 vorgesehen sein. Durch den Streugutabstreifer 15 vom Belegband 2 entferntes Schütt- oder Streugut fällt in den Streugutbehälter 8.

Um die Verschleppung von Schütt- oder Streugut noch besser vermeiden zu können, wird beim Transport der Teigstücke mit der Abrieseleinheit schlecht haftendes Schütt- oder Streugut von den Teigstücken entfernt. Auch dieses entfernte Schütt- oder Streugut wird im Streugutbehälter 8 aufgefangen. Die Abrieseleinheit, ist in der dargestellten Ausführungsform auf der Grundeinheit der Vorrichtung 1 angeordnet. Die Abrieseleinheit weist eine in Längsrichtung verstellbare Eingabenase auf. Dadurch ist eine Anpassung an die Bandspannung des Belegbandes 2 möglich ist und die Abrieseleinheit ist mit einem einstellbaren Zwischenraum zur Belegbandumlenkrolle 13 angeordnet. Diese Anordnung erlaubt es, dass Schütt- oder Streugut durch den Zwischenraum zwischen Belegband 2 und Abrieseleinheit fallen kann und eine Verschleppung von Schütt- oder Streugut kann vermieden werden. Der Bandkörper der Abrieseleinheit ist abnehmbar bzw. aus der Vorrichtung 1 ausziehbar. In der dargestellten Ausführungsform erfolgt der Antrieb über eine lösbare Kupplung. In einer alternativen Ausführungsform kann vorgesehen sein, dass als Antrieb der Abrieseleinheit ein Motor mit oder ohne lösbare Kabelverbindung vorgesehen ist.

In Fig. 1 ist zu erkennen, dass die erfindungsgemäße Vorrichtung 1 einen deutlich geringeren Platzbedarf aufweist als die bekannte Bestreuungseinrichtung 23 zur Bestreuung von oben. Durch den kompakteren Aufbau wird zudem die Reinigung der Vorrichtung 1 deutlich erleichtert. Die beweglichen Bauteile der Vorrichtung 1 sind mit der Grundeinheit der Vorrichtung 1 verriegelt.

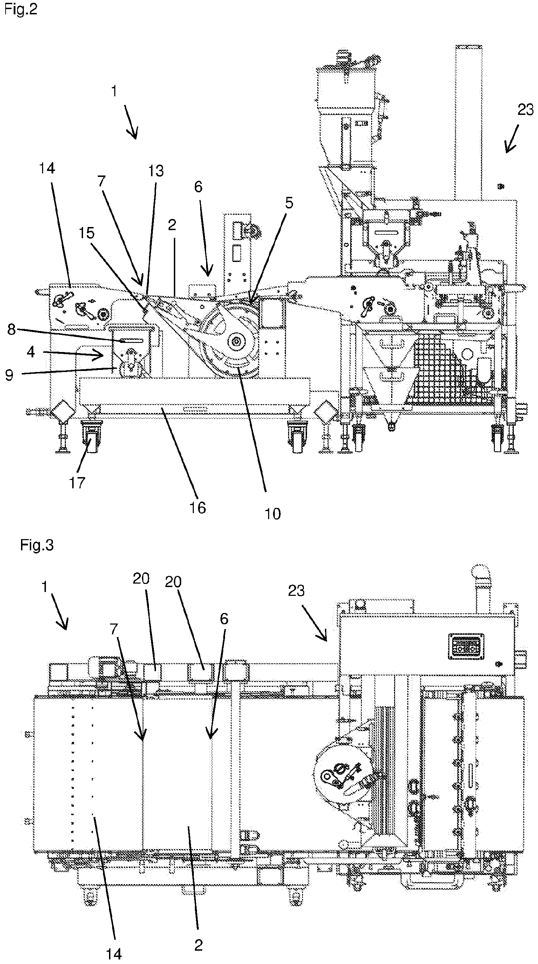

Fig. 2 zeigt, dass das Transportband 3 auf einem Rahmen 16 gelagert ist. Der Rahmen 16 ist durch Schwenkräder 17 verschiebbar, wodurch eine Entfernung des Rahmens 16 aus der Vorrichtung 1 möglich ist, wobei eine Verschiebung senkrecht zur Laufrichtung des Transportbands 3 aus der Vorrichtung 1 heraus möglich ist. Dadurch wird die Reinigung der Vorrichtung 1 erleichtert. Die Schwenkräder 17 können gebremst oder ungebremst ausgeführt werden.

In Fig. 3 ist zu erkennen, dass die Vorrichtung 1 so aufgebaut ist, dass das Belegband 2, die Abrieseleinheit und das Transportband 3 einseitig fliegend gelagert sind. Die Lager 20 sind dabei in der dargestellten Ausführungsform alle in Laufrichtung des Belegbands 2 von Teigübernahme 6 zu Teigabgabe 7 rechts angeordnet. Durch die einseitige Lagerung wird die Reinigung vereinfacht. In der dargestellten Ausführungsform ist dabei eine Lagerung auf einem abziehbaren Dorn vorgesehen.

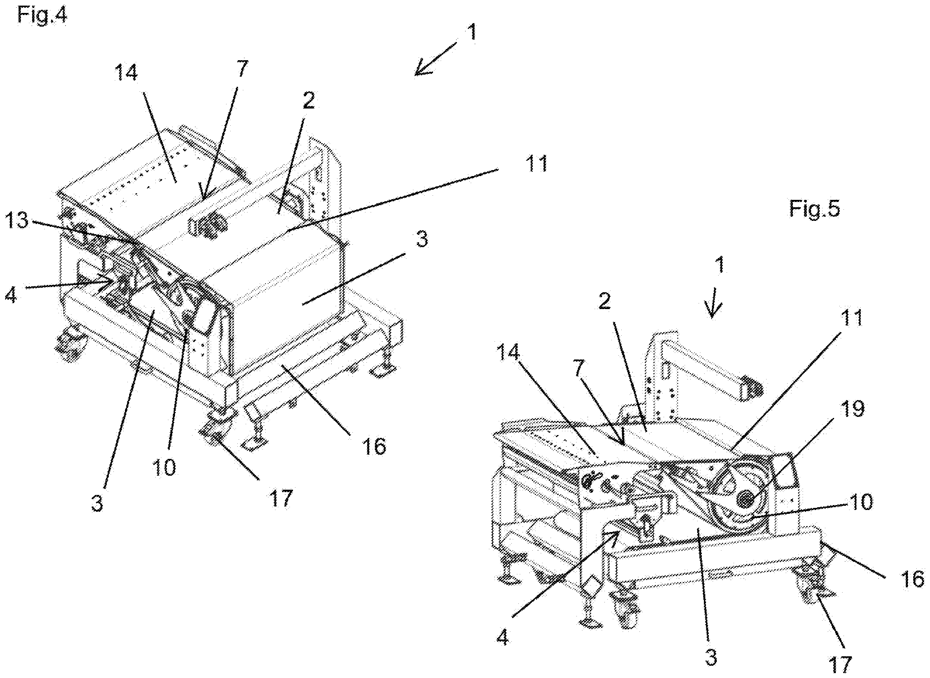

In Fig. 5 ist zu erkennen, dass die Gegenseite der Lagerung mit einer Fixierschraube 19 gehalten wird. Um auch bei größeren Bandbreiten einen stabilen Aufbau zu gewährleisten, kann vorgesehen sein, dass die freien Enden gestützt werden.

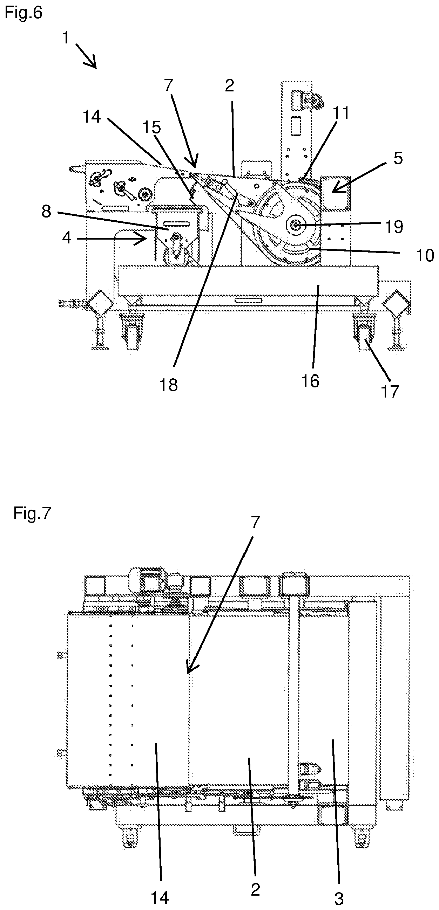

In Fig. 4 bis 7 ist die Vorrichtung 1 in Alleinstellung gezeigt. Es ist zu erkennen, dass das Transportband 3 am Ende des Übertragungsbereichs 5 eine als Messerkante 11 ausgeführte Umlenkrolle 12 aufweist. Die Messerkante 11 ermöglicht eine flache Anordnung der Übergabenase und ist daher für eine schonende Übergabe der Teigstücke vorteilhaft.

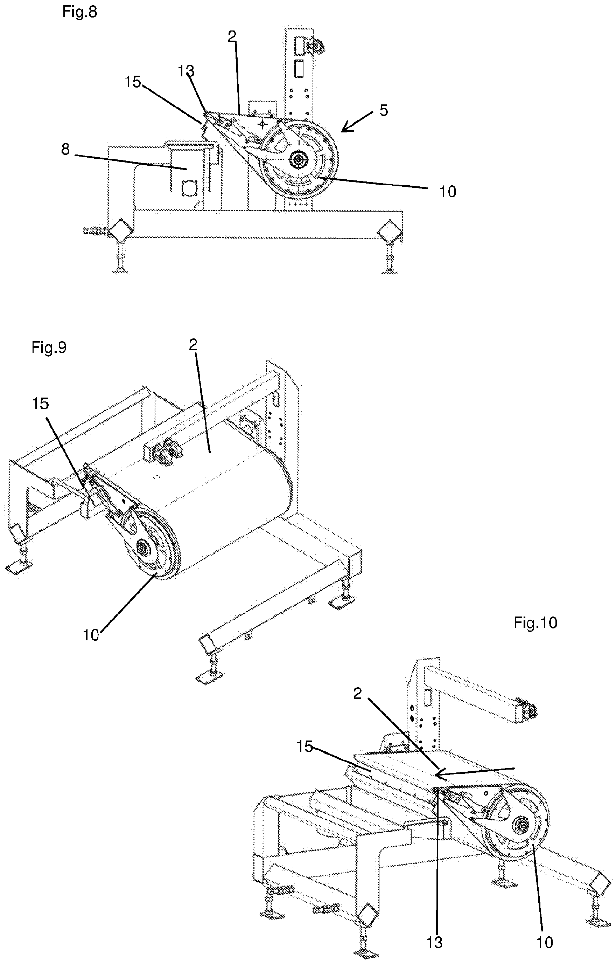

In den Fig. 8 bis 10 ist das Belegband 2 und die Aufhängung des Belegbands 2 als einzelner Bauteil dargestellt. In der dargestellten Ausführungsform ist das Belegband 2 an der Grundeinheit der Vorrichtung 1 befestigt. Die Grundeinheit kann mit vorangehenden und nachfolgenden Anlagenkomponenten über einstellbare Verbindungen verbunden werden. Beispielsweise kann eine Verbindung mit Gewindespindeln vorgesehen sein.

In der dargestellten Ausführungsform ist das Belegband 2 einseitig fliegend gelagert. Das Belegband 2 ist im Übertragungsbereich 5 um die Trommel 10 in einem Kreisbogen geführt. In der dargestellten Ausführungsform ist die Trommel 10 auf einem Dorn des Bandkörpers gelagert, sodass durch die lösbare Verbindung die Reinigung besonders einfach ist und auch bei größeren Nennbreiten eine ausreichende Stabilität erzielt werden kann. Durch Lösen der Fixierschraube 19 ist es möglich, die Trommel 10 vom Dorn abzuziehen.

Die Trommel 10 weist in der dargestellten Ausführungsform einen Durchmesser von 430 mm auf. Die Trommel 10 ist die Antriebstrommel des Belegbands 2. Der Umschlingungswinkel des Belegbands 2 um die Trommel 10 ist größer als 180°. Das Belegband 2 ist weiters über die Belegbandumlenkrolle 13 geführt. Besonders vorteilhaft ist dabei eine winkelsymmetrische Spannung des Belegbandes 2 um die Belastung auf die Lagerung der Belegbandumlenkrolle 13 zu reduzieren. Die Transportebene und die Rückführebene schließen in der dargestellten Ausführungsform einen Winkel von 45° ein.

Das Belegband 2 weist eine Laufrichtung auf, bei der das Obertrum des Belegbands 2 von der Trommel 10 zur Belegbandumlenkrolle 13 bewegt wird. In der dargestellten Ausführungsform verläuft das Belegband 2 in der Transportebene in einem Winkel von 5° zur Waagrechten, wodurch eine besonders schonende Übernahme der Teigstücke von der Übergabenase auf das Belegband 2 ermöglicht wird. Es kann vorgesehen sein, dass der Winkel des Belegbandes 2 bzw. dessen Neigung zur Waagrechten einstellbar ist und beispielsweise das Belegband 2 in diesem Bereich waagrecht verläuft.

In der dargestellten Ausführungsform ist die Belegbandumlenkrolle 13 mittels Gleitteilen im Seitenschild geführt und durch einen Kniehebel 18 verstellbar. Durch Verstellen des Kniehebels 18 kann das Belegband 2 entspannt werden und so von der Trommel 10 und der Belegbandumlenkung 13 abgezogen werden, um eine einfachere Reinigung der Komponenten, inklusive des Transportbandes und des Belegbands zu erreichen.

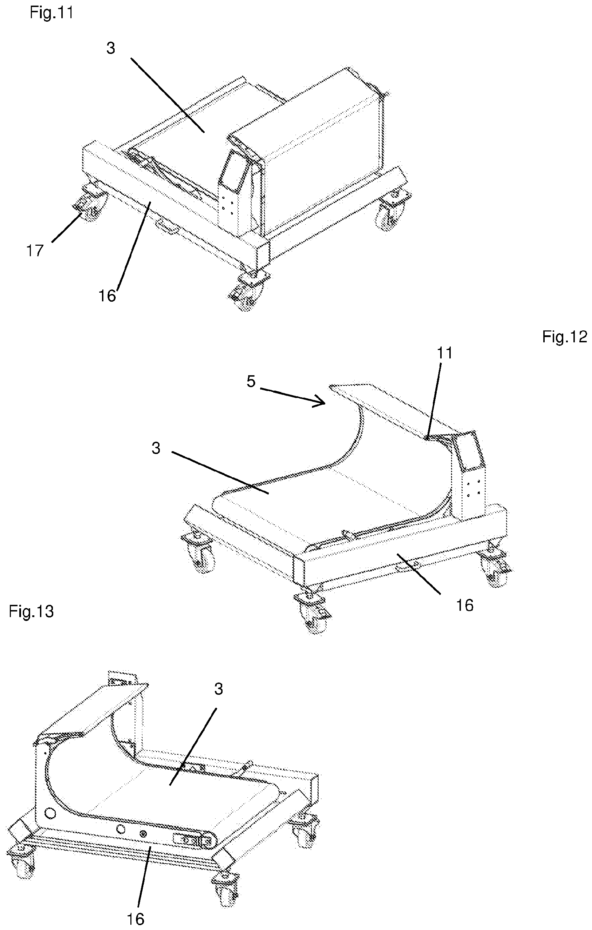

In den Fig. 11 bis 14 ist gezeigt, wie das Transportband 3 auf dem verschiebbaren Rahmen 16 angeordnet ist. In einer alternativen Ausführungsform kann vorgesehen sein, dass das Transportband 3 nicht auf einem verschiebbaren Rahmen gelagert ist, und zur Reinigung die übrigen Bauteile der Vorrichtung 1 anhebbar oder absenkbar sind.

In der dargestellten Ausführungsform wird das Transportband 3 über Umlenkrollen 12 geführt. Vorteilhaft kann sein, wenn eine Bandauflage das Transportband 3 bis zum Beginn des Übertragungsbereichs 5 stützt. Im Übertragungsbereich 5 ist das Transportband 3 über drei Umlenkrollen 12 geführt, die eine Anordnung im Kreisbogen ermöglichen. Der Kreisbogen folgt dem Verlauf der Trommel 10. Dabei ist das Transportband 3 so angeordnet, dass der Kreisbogen einen Mittelpunktswinkel von 175° aufweist. Durch die Anordnung des Transportbands 3 benachbart zum Belegband 2, kann Schütt- oder Streugut zwischen dem Belegband 2 und dem Transportband 3 geklemmt werden und nach oben transportiert werden. Dazu werden in der Vorrichtung 1 das Belegband 2 und das Transportband 3 so angeordnet, dass im Übertragungsbereich 5 der Abstand zwischen Belegband 2 und Transportband 3 einstellbar ist und im Wesentlichen der Korngröße des Schütt- oder Streuguts entspricht. Das Streugut kann dabei beispielsweise Mohn, Sesam, Haferflocken oder anderes in Bäckereibetrieben übliches Schütt- oder Streugut sein. Die Trommel 10 des Belegbands 2 und die Umlenkrollen 12 des Transportbands 3 weisen eine entgegengesetzte Laufrichtung auf, das Belegband 2 läuft in der dargestellten Ausführungsform im Uhrzeigersinn und das Transportband 3 entgegen des Uhrzeigersinns. Im Übertragungsbereich 5 wird dadurch das Schütt- oder Streugut schonend nach oben transportiert.

Am Ende des Übertragungsbereichs 5 ist die oberste Umlenkrolle 12 des Transportbands 3 angeordnet, die als Messerkante 11 ausgebildet ist. An dieser Stelle kann optional ein Abstreifer vorgesehen werden, um ein Verschleppen des Schütt- oder Streuguts entlang des Transportbands 3 über den Übertragungsbereich 5 hinaus zu vermeiden. Durch die Messerkante 11 ist das Ende des Übertragungsbereichs 5 flach ausgebildet, sodass die Übergabenase von der vorigen Anlagenkomponente in einem flachen Winkel zum Belegband 2 angeordnet werden kann, um eine schonende Übergabe der Teigstücke zu ermöglichen.

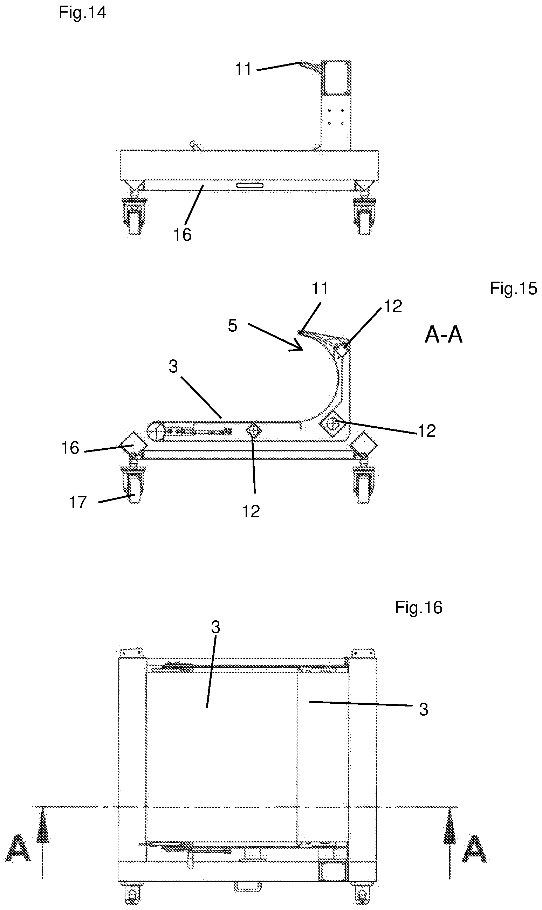

Die Fig. 16 bis 19 zeigen das Transportband 3 ohne den Rahmen 16. In der dargestellten Ausführungsform ist das Transportband 3 über insgesamt fünf Umlenkrollen geführt und über eine Antriebstrommel angetrieben. Diese Antriebstrommel kann als Trommelmotor, mit Aufsteckmotor oder mit mechanischem Antrieb mittels Riemen, Kette oder Kupplung ausgeführt sein. In der dargestellten Ausführungsform ist die Antriebstrommel als Trommelmotor dargestellt und fungiert gleichzeitig als Spannwelle. Das Spannen bzw. Entspannen des Transportbands 3 erfolgt mittels Kniehebel 18. Alternativ können andere bekannte Spannelemente vorgesehen sein. In der dargestellten Ausführungsform ist die Aufnahme der Antriebstrommel im Seitenschild mittels Gleitteilen geführt. Der Bandkörper ist einseitig fliegend gelagert, sodass nach Entspannen der Spann- und Antriebswelle das Transportband 3 leicht vom Bandkörper abgezogen werden kann.

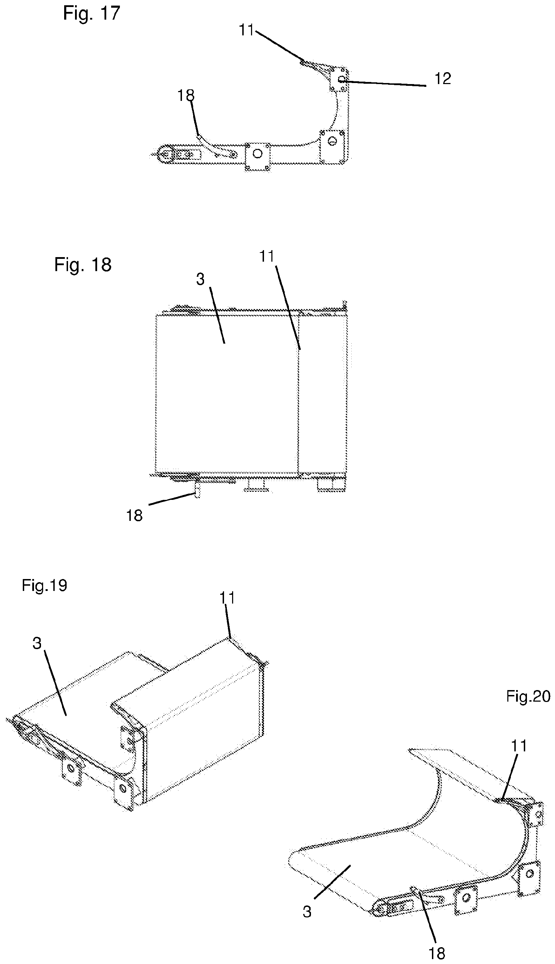

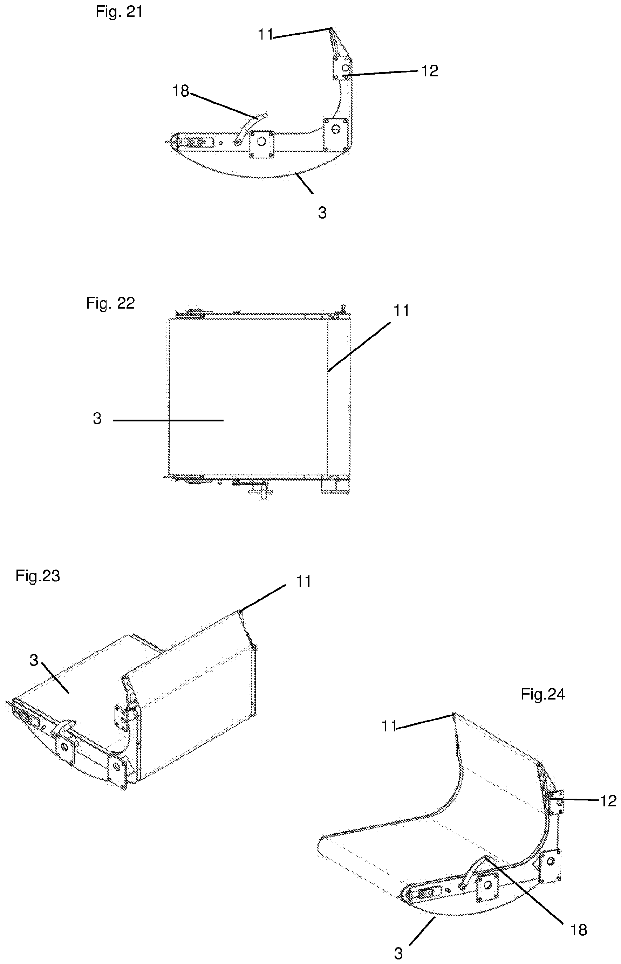

Die Fig. 20 bis 23 zeigen das Transportband 3 in entspanntem Zustand. Durch die Betätigung des Kniehebels 18 wird die Messerkante 11 um einen Drehpunkt nach oben geschwenkt. Durch dieses Verschwenken der Messerkante 11 kommt es zu einer Entspannung des Transportbands 3. Dies erleichtert den Ausbau, den Bandwechsel und die Reinigung der Vorrichtung 1.

Die erfindungsgemäße Vorrichtung 1 ermöglicht daher ein exaktes Bestreuen von Teigstücken mit einer kompakten Anlagenkomponente, die besonders leicht zu reinigen ist.

## Patentansprüche

1. Vorrichtung zum Aufbringen von Schütt- oder Streugut, insbesondere zum Aufbringen von für Backwaren relevantem Schütt- und Streugut, vorzugsweise Mohn oder Sesam, auf die Unterseite von Teigstücken umfassend
- ein Belegband (2) zum Transport der Teigstücke von einer Teigübernahme (6) zu einer Teigabgabe (7), wobei an der Teigübernahme (6) auf deren Unterseite unbestreute Teigstücke auf das Belegband (2) übernehmbar sind und an der Teigabgabe (7) auf deren Unterseite bestreute Teigstücke von dem Belegband (2) abgebbar sind, wobei die Teigstücke in einer Transportebene des Belegbandes (2) von der Teigübernahme (6) zur Teigabgabe (7) transportierbar sind und wobei das Belegband (2) in einer Rückführebene unterhalb der Transportebene des Belegbandes (2) wieder zur Teigübernahme (6) geführt ist,
- eine Streuguteinheit (4) zur Aufnahme und Aufbringung des Schütt- oder Streuguts,
- ein Transportband (3), wobei das Transportband (3) abschnittsweise unter der Streuguteinheit (4) angeordnet ist und wobei durch die Streuguteinheit (4) Schütt- oder Streugut auf das Transportband (3) aufbringbar ist,
wobei
die Streuguteinheit (4) derart unterhalb der Transportebene angeordnet ist, dass überschüssiges Schütt- oder Streugut am Ende der Transportebene vom Belegband (2) in die Streuguteinheit (4) abrieselt, und wobei zwischen der Rückführebene und der Transportebene des Belegbandes (2) das Belegband (2) und das Transportband (3) in einem Übertragungsbereich (5) derart in einem, insbesondere verstellbaren, Abstand zueinander oder aneinander anliegend angeordnet sind, dass Schütt- oder Streugut zwischen dem Belegband (2) und dem Transportband (3) klemmbar und im Übertragungsbereich (5) vom Transportband (3) auf das Belegband (2) übertragbar ist, wobei das Transportband (3) im Übertragungsbereich (5) dem Verlauf des Belegbandes (2) folgend, insbesondere in Bezug auf die Rückführung des Belegbandes (3) außenliegend, angeordnet ist.

2. Vorrichtung nach Anspruch 1, **dadurch gekennzeichnet, dass** das Belegband (2) am oberen Endpunkt des Übertragungsbereichs (5) eine Steigung von maximal 60°, insbesondere von 0° bis 30°, vorzugsweise von 0° bis 10°, aufweist.

3. Vorrichtung nach Anspruch 1 oder 2, **dadurch gekennzeichnet, dass** im Übertragungsbereich (5) das Belegband (2) und das Transportband (3) jeweils in einem gemeinsamen Bogen geführt sind.

4. Vorrichtung nach Anspruch 3, **dadurch gekennzeichnet, dass** im Übertragungsbereich (5) das Belegband (2) und das Transportband (3) jeweils in einem Kreisbogen geführt sind, wobei insbesondere vorgesehen ist, dass die von Belegband (2) und Transportband (3) beschriebenen Kreisbögen den selben Mittelpunkt und einen gemeinsamen Mittelpunktswinkel von zumindest 90°, vorzugsweise zumindest 170°, aufweisen.

5. Vorrichtung nach einem der Ansprüche 1 bis 4, **dadurch gekennzeichnet, dass** das Belegband (2) abschnittsweise, insbesondere im Übertragungsbereich (5), um eine Trommel (10) verlaufend angeordnet ist, wobei der Umfang der Trommel (10) einen vom Belegband (2) beschriebenen Kreisbogen vorgibt, und wobei insbesondere vorgesehen ist, dass der Umschlingungswinkel des Belegbands (2) um die Trommel (10) zumindest 180°, insbesondere zumindest 200°, beträgt und/oder wobei insbesondere vorgesehen ist, dass die Trommel (10) als Antriebstrommel des Belegbands (2) ausgebildet ist.

6. Vorrichtung nach Anspruch 5, **dadurch gekennzeichnet, dass** der Durchmesser der Trommel (10) zumindest der Höhe der Streuguteinheit (4) entspricht.

7. Vorrichtung nach einem der Ansprüche 1 bis 6, **dadurch gekennzeichnet, dass** das Transportband (3) in Laufrichtung des Transportbandes (3) am Ende des Übertragungsbereichs (5) eine Messerkante (11) aufweist oder eine angeordnete Umlenkrolle umfasst, wobei die Messerkante (11) oder die Umlenkrolle derart auf einer schwenkbaren Lagerung angeordnet sind, dass das Transportband (3) durch Verschwenken der Umlenkrolle entspannbar ist.

8. Vorrichtung nach einem der Ansprüche 1 bis 7, **dadurch gekennzeichnet, dass** das Belegband (2) an der Teigabgabe (7) über eine Belegbandumlenkrolle (13) geführt ist und vorzugsweise in Laufrichtung des Belegbands (2) nach der Belegbandumlenkrolle (13) ein Streugutabstreifer (15) vorgesehen ist, so dass überschüssiges Schütt- oder Streugut vom Belegband (2) in die Streuguteinheit (4) einbringbar ist.

9. Vorrichtung nach einem Ansprüche 1 bis 8, **dadurch gekennzeichnet, dass** die Streuguteinheit (4) einen Streugutbehälter (8) zur Aufnahme des aufzubringenden Schütt-oder Streuguts umfasst und eine in Schwerkraftrichtung unter dem Streugutbehälter (8) angeordnete Streueinrichtung (9) zum Aufbringen des Streuguts umfasst.

10. Vorrichtung nach einem der Ansprüche 1 bis 9, **dadurch gekennzeichnet, dass** eine weitere Transporteinheit (14) vorgesehen ist, die derart angeordnet ist, dass an der Teigabgabe (7) Teigstücke vom Belegband (2) an die weitere Transporteinheit (14) abgebbar sind, wobei insbesondere vorgesehen ist, dass zwischen dem Belegband (2) und der weiteren Transporteinheit ein Zwischenraum vorgesehen ist, der derart ausgebildet ist, dass auf dem Belegband (2) befindliches Schütt- oder Streugut durch den Zwischenraum zwischen Belegband (2) und weiterer Transporteinheit (14) transportierbar, insbesondere abrieselbar, ist.

11. Vorrichtung nach einem der Ansprüche 1 bis 10, **dadurch gekennzeichnet, dass** die Vorrichtung, insbesondere als weitere Transporteinheit (14), eine Abrieseleinheit, insbesondere ein Gitterband, zur Befreiung der Teigstücke von schlechthaftendem Schütt-oder Streugut aufweist, wobei an der Teigabgabe (7) die Teigstücke von dem Belegband (2) an die Abrieseleinheit abgebbar sind, wobei die Abrieseleinheit derart ausgebildet ist, dass schlechthaftendes Schütt- oder Streugut entfernbar ist, und wobei insbesondere vorgesehen ist, dass entferntes Streugut in die Streuguteinheit (4) einbringbar ist.

12. Vorrichtung nach einem der Ansprüche 1 bis 11, **dadurch gekennzeichnet, dass** zwischen Teigübernahme (6) und Teigabgabe (7) über dem Belegband (2) eine Druckrolle so angeordnet ist, dass durch die Druckrolle auf dem Belegband (2) befindliche Teigstücke auf das Schütt- oder Streugut drückbar sind, wobei insbesondere vorgesehen ist, dass der Abstand zwischen Druckrolle und Belegband (2) einstellbar ist.

13. Vorrichtung nach einem der Ansprüche 1 bis 12, **dadurch gekennzeichnet, dass** das Belegband (2) und/oder das Transportband (3) und/oder die Abrieseleinheit (14) einseitig fliegend, insbesondere in Laufrichtung des Belegbandes (2) neben der Vorrichtung, gelagert sind, wobei insbesondere vorgesehen ist, dass alle Lager auf der gleichen Seite der Vorrichtung (1) angeordnet sind, und wobei die Lagerung vorzugsweise auf einem abziehbaren Dorn ausgebildet ist.

14. Vorrichtung nach einem der Ansprüche 1 bis 13, **dadurch gekennzeichnet, dass** das Transportband (3) auf einem Rahmen (16) angeordnet ist, wobei der Rahmen (16), insbesondere auf Schwenkrädern (17), so gelagert ist, dass er aus der Vorrichtung, entfernbar ist, wobei er, vorzugsweise normal zur Laufrichtung des Transportbands (3), verschiebbar ist.

15. Teiganlage mit zumindest einer Vorrichtung (1) nach einem der Ansprüche 1 bis 14, wobei insbesondere vorgesehen ist, dass die Teiganlage eine Bestreuungseinrichtung (23) zum Bestreuen von oben umfasst, die derart angeordnet ist, dass Teigstücke wendungsfrei beidseitig bestreubar sind,
und/oder wobei insbesondere vorgesehen ist, dass die Teiganlage zwei Vorrichtungen (1) nach einem der Ansprüche 1 bis 14 umfasst, wobei die Vorrichtungen (1) derart angeordnet sind, dass zwischen den Vorrichtungen (1) eine Wendung der Teigstücke vorgesehen ist.

## Claims

1. A device for applying bulk or sprinkable material, in particular for applying bulk or sprinkable material relevant for baked goods, preferably poppy seeds or sesame seeds, to the underside of dough pieces, comprising
- a receiving belt (2) for conveying the pieces of dough from a dough receiving point (6) to a dough dispensing point (7), wherein, at the dough receiving point (6), pieces of dough, unsprinkled on the underside thereof, can be received onto the receiving belt (2), and, at the dough dispensing point (7), pieces of dough, sprinkled on the underside thereof, can be dispensed from the receiving belt (2), wherein the pieces of dough can be conveyed in a conveyor plane of the receiving belt (2) from the dough receiving point (6) to the dough dispensing point (7), and wherein the receiving belt (2) is led back to the dough receiving point (6) in a return plane below the conveyor plane of the receiving belt (2),
- a sprinkable material unit (4) for receiving and applying the bulk or sprinkable material,
- a conveyor belt (3), wherein the conveyor belt (3) is arranged at least partly below the sprinkable material unit (4), and wherein it is possible to apply bulk or sprinkable material to the conveyor belt (3) by the sprinkable material unit (4),
wherein the sprinkable material unit (4) is arranged below the conveyor plane, in such a way that excess bulk or sprinkable material trickles down from the conveyor belt (2) into the sprinkable material unit (4) at the end of the conveyor level, and wherein, between the return plane and the conveyor plane of the receiving belt (2), the receiving belt (2) and conveyor belt (3) in a transfer region (5) are at a, in particular adjustable, distance from each other or adjacent to one another in such a way that bulk or sprinkable material can be clamped between the receiving belt (2) and the conveyor belt (3) and, in the transfer region (5), can be transferred from the conveyor belt (3) onto the receiving belt (2), wherein in the transfer region (5) the conveyor belt (3) is arranged so as to follow the course of the receiving belt, in particular with regard to the return of the receiving belt (3).

2. The device according to claim 1, **characterised in that** the receiving belt (2) on the upper endpoint of the transfer region (5) has a rise of at most 60°, in particular from 0 ° to 30°, preferably from 0° to 10°.

3. The device according to claim 1 or 2, **characterised in that**, in the transfer region (5), the receiving belt (2) and the conveyor belt (3) are each guided in a common arc.

4. The device according to claim 3, **characterised in that**, in the transfer region (5), the receiving belt (2) and the conveyor belt (3) are each guided in a circular arc, wherein it is in particular provided that the circular arcs, described by the receiving belt (2) and conveyor belt (3), have the same centre point and a common centre point angle of at least 90°, preferably at least 170°.

5. The device according to any one of claims 1 to 4, **characterised in that** the receiving belt (2) at least in part, in particular in the transfer region (5), is arranged to travel about a drum (10), wherein the circumference of the drum (10) determines a circular arc described by the receiving belt (2), and wherein it is in particular foreseen that the wrap-around angle of the receiving belt (2) about the drum (10) is at least 180°, in particular at least 200°, and/or wherein it is in particular provided that the drum (10) is configured as a driver drum of the receiving belt (2).

6. The device according to claim 5, **characterised in that** the diameter of the drum (10) corresponds at least to the height of the sprinkable material unit (4).

7. The device according to any one of claims 1 to 6, **characterised in that** the conveyor belt (3) in the direction of travel of the conveyor belt (3) at the end of the transfer region (5) has a blade edge (11) or comprises an arranged deflection roller, wherein the blade edge (11) or deflection roller is arranged on a pivotable mounting in such a way that the conveyor belt (3) can be slackened by pivoting the deflection roller.

8. The device according to any one of claims 1 to 7, **characterised in that** the receiving belt (2) at the dough dispensing point (7) is guided over a receiving belt deflection roller (13) and a sprinkable material remover (15) is provided, preferably in the direction of travel of the receiving belt (2) beyond the receiving belt deflection roller (13), such that excess bulk or sprinkable material can be moved from the receiving belt (2) into the sprinkable material unit (4).

9. The device according to any one of claims 1 to 8, **characterised in that** the sprinkable material unit (4) comprises a sprinkable material container (8) for receiving the bulk or sprinkable material that is to be applied, and comprises a sprinkler apparatus (9), arranged in the direction of gravity below the sprinkable material container (8), for applying the sprinkable material.

10. The device according to any one of claims 1 to 9, **characterised in that** an additional conveyor unit (14) is provided such that, at the dough dispensing point (7), dough pieces can be dispensed from the receiving belt (2) to the additional conveyor unit (14), wherein it is in particular provided that between the receiving belt (2) and the additional conveyor unit, an intermediate space is provided, which is configured such that bulk or sprinkable material, located on the receiving belt (2), can be conveyed, and in particular can trickle down, through the intermediate space between the receiving belt (2) and the additional conveyor unit (14).

11. The device according to any one of claims 1 to 10, **characterised in that** the device, in particular as additional conveyor unit (14), has a trickle-down unit, in particular a grid belt, to clear the dough pieces of poorly adhering bulk or sprinkable material, wherein, at the dough dispensing point (7), the dough pieces can be dispensed from the receiving belt (2) to the trickle-down unit, wherein the trickle-down unit is configured such that poorly adhering sprinkable or bulk material can be removed, and wherein it is in particular provided that removed bulk material can be received in the bulk material unit (4).

12. The device according to any one of claims 1 to 11, **characterised in that**, between the dough receiving point (6) and the dough dispensing point (7), a pressure roller is arranged above the receiving belt (2) such that dough pieces, located on the receiving belt (2), can be pressed onto the bulk or sprinkable material by the pressure roller, wherein it is in particular provided that the distance between the pressure roller and the receiving belt (2) is adjustable.

13. The device according to any one of claims 1 to 12, **characterised in that** the receiving belt (2) and/or the conveyor belt (3) and/or the trickle-down unit (14), flush on one side, in particular are mounted in the direction of travel of the receiving belt (2) next to the device, wherein it is in particular provided that all bearings are arranged on the same side of the device (1), and wherein the mounting is preferably configured on a removable mandrel.

14. The device according to any one of claims 1 to 13, **characterised in that** the conveyor belt (3) is arranged on a frame (16), wherein the frame (16), in particular on swivel wheels (17), is mounted such that it can be removed from the device, wherein it can slide, preferably perpendicular to the direction of travel of the conveyor belt (3).

15. A dough installation with at least one device (1) according to any one of claims 1 to 14, wherein it is in particular provided that the dough installation comprises a sprinkler apparatus (23) for sprinkling from above, which is arranged in such a way that dough pieces can be sprinkled on both sides without twisting,
and/or wherein it is in particular provided that the dough installation comprises two devices (1) according to any one of claims 1 to 14, wherein the devices (1) are arranged in such a way that twisting of the dough pieces is provided between the devices (1).

## Revendications

1. Dispositif d'application de produit en vrac ou à disperser, en particulier d'application de produit en vrac ou à disperser important pour des pâtisseries, de préférence du pavot ou du sésame, sur le côté inférieur de morceaux de pâte comprenant
- une bande de répartition (2) pour le transport des morceaux de pâte d'un système de prise en charge de pâte (6) à un système de distribution de pâte (7), dans lequel des morceaux de pâte non dispersés au niveau du système de prise en charge de pâte (6) sur son côté inférieur peuvent être pris en charge sur la bande de répartition (2) et des morceaux de pâte dispersés au niveau du système de distribution de pâte (7) sur son côté inférieur peuvent être distribués par la bande de répartition (2), dans lequel les morceaux de pâte peuvent être transportés dans un plan de transport de la bande de répartition (2) du système de prise en charge de pâte (6) au système de distribution de pâte (7) et dans lequel la bande de répartition (2) est guidée dans un plan de retour en dessous du plan de transport de la bande de répartition (2) de nouveau au système de prise en charge de pâte (6),
- une unité de produit à disperser (4) pour la réception et l'application du produit en vrac ou à disperser,
- une bande de transport (3), dans lequel la bande de transport (3) est agencée par sections sous l'unité de produit à disperser (4) et dans lequel du produit en vrac ou à disperser peut être appliqué sur la bande de transport (3) par l'unité de produit à disperser (4),
dans lequel l'unité de produit à disperser (4) est agencée en dessous du plan de transport de telle manière que du produit en vrac ou à disperser excédentaire ruisselle à l'extrémité du plan de transport de la bande de répartition (2) dans l'unité de produit à disperser (4), et dans lequel la bande de répartition (2) et la bande de transport (3) sont agencées entre le plan de retour et le plan de transport de la bande de répartition (2) dans une zone de transmission (5) à une distance en particulier réglable l'une par rapport à l'autre ou reposant l'une contre l'autre de telle manière que du produit en vrac ou à disperser puisse être serré entre la bande de répartition (2) et la bande de transport (3) et puisse être transmis dans la zone de transmission (5) de la bande de transport (3) à la bande de répartition (2), dans lequel la bande de transport (3) est agencée dans la zone de transmission (5) suivant l'étendue de la bande de répartition (2), en particulier à l'extérieur par rapport au retour de la bande de répartition (3).

2. Dispositif selon la revendication 1, **caractérisé en ce que** la bande de répartition (2) présente au point d'extrémité supérieur de la zone de transmission (5) une pente de 60° maximum, en particulier de 0° à 30°, de préférence de 0° à 10°.

3. Dispositif selon la revendication 1 ou 2, **caractérisé en ce que** la bande de répartition (2) et la bande de transport (3) sont guidées respectivement dans un arc commun dans la zone de transmission (5).

4. Dispositif selon la revendication 3, **caractérisé en ce que** dans la zone de transmission (5), la bande de répartition (2) et la bande de transport (3) sont guidées respectivement dans un arc de cercle, dans lequel il est en particulier prévu que les arcs de cercle décrits par la bande de répartition (2) et la bande de transport (3) présentent le même point médian et un angle de point médian commun d'au moins 90°, de préférence d'au moins 170°.

5. Dispositif selon l'une quelconque des revendications 1 à 4, **caractérisé en ce que** la bande de répartition (2) est agencée s'étendant par sections, en particulier dans la zone de transmission (5), autour d'un tambour (10), dans lequel la périphérie du tambour (10) prédéfinit un arc de cercle décrit par la bande de répartition (2), et dans lequel il est en particulier prévu que l'angle d'enroulement de la bande de répartition (2) autour du tambour (10) s'élève à au moins 180°, en particulier à au moins 200° et/ou dans lequel il est en particulier prévu que le tambour (10) soit réalisé comme tambour d'entraînement de la bande de répartition (2).

6. Dispositif selon la revendication 5, **caractérisé en ce que** le diamètre du tambour (10) correspond au moins à la hauteur de l'unité de produit à disperser (4).

7. Dispositif selon l'une quelconque des revendications 1 à 6, **caractérisé en ce que** la bande de transport (3) présente dans le sens de la marche de la bande de transport (3) à l'extrémité de la zone de transmission (5) une arête de couteau (11) ou comprend un rouleau de déviation agencé, dans lequel l'arête de couteau (11) ou le rouleau de déviation est agencé sur un logement pivotant de telle manière que la bande de transport (3) puisse être desserrée par pivotement du rouleau de déviation.

8. Dispositif selon l'une quelconque des revendications 1 à 7, **caractérisé en ce que** la bande de répartition (2) est guidée au niveau du système de distribution de pâte (7) par le biais d'un rouleau de déviation de bande de répartition (13) et une racle de produit à disperser (15) est prévue de préférence dans le sens de la marche de la bande de répartition (2) après le rouleau de déviation de bande de répartition (13) de sorte que du produit en vrac ou à disperser excédentaire puisse être introduit de la bande de répartition (2) dans l'unité de produit à disperser (4).

9. Dispositif selon l'une quelconque des revendications 1 à 8, **caractérisé en ce que** l'unité de produit à disperser (4) comprend un récipient de produit à disperser (8) pour la réception du produit en vrac ou à disperser à appliquer et comprend un dispositif de dispersion (9) agencé dans le sens de la force de gravité sous le récipient de produit à disperser (8) pour l'application du produit à disperser.

10. Dispositif selon l'une quelconque des revendications 1 à 9, **caractérisé en ce qu'**une autre unité de transport (14) est prévue, laquelle est agencée de telle manière qu'au niveau du système de distribution de pâte (7), des morceaux de pâte puissent être distribués de la bande de bande de répartition (2) à l'autre unité de transport (14), dans lequel il est en particulier prévu qu'un espace intermédiaire soit prévu entre la bande de répartition (2) et l'autre unité de transport, espace qui est réalisé de telle manière que du produit en vrac ou à disperser se trouvant sur la bande de répartition (2) puisse être transporté, en particulier ruisselé, par l'espace intermédiaire entre la bande de répartition (2) et l'autre unité de transport (14).

11. Dispositif selon l'une quelconque des revendications 1 à 10, **caractérisé en ce que** le dispositif présente, en particulier comme autre unité de transport (14), une unité de ruissellement, en particulier une bande à grille, pour la libération de morceaux de pâte de produit en vrac ou à disperser à mauvaise adhérence, dans lequel au niveau de système de distribution de pâte (7), les morceaux de pâte peuvent être distribués de bande de répartition (2) à l'unité de ruissellement, dans lequel l'unité de ruissellement est réalisée de telle manière que du produit en vrac ou à disperser à mauvaise adhérence puisse être retiré, et dans lequel il est en particulier prévu que du produit à disperser retiré puisse être introduit dans l'unité de produit à disperser (4).

12. Dispositif selon l'une quelconque des revendications 1 à 11, **caractérisé en ce qu'**un rouleau de pressage est agencé entre le système de prise en charge de pâte (6) et le système de distribution de pâte (7) au-dessus de la bande de répartition (2) de sorte que des morceaux de pâte se trouvant sur la bande de répartition (2) puissent être pressés sur le produit en vrac ou à disperser par le rouleau de pressage, dans lequel il est de préférence prévu que la distance soit réglable entre le rouleau de pressage et la bande de répartition (2).

13. Dispositif selon l'une quelconque des revendications 1 à 12, **caractérisé en ce que** la bande de répartition (2) et/ou la bande de transport (3) et/ou l'unité de ruissellement (14) sont logés en porte-à-faux d'un côté, en particulier dans le sens de la marche de la bande de répartition (2) à côté du dispositif, dans lequel il est en particulier prévu que tous les paliers soient agencés sur le même côté du dispositif (1), et dans lequel le logement est de préférence réalisé sur une épine amovible.

14. Dispositif selon l'une quelconque des revendications 1 à 13, **caractérisé en ce que** la bande de transport (3) est agencée sur un cadre (16), dans lequel le cadre (16) est logé en particulier sur des roues de pivotement (17) de sorte qu'il puisse être retiré du dispositif, dans lequel il peut être déplacé de préférence normalement au sens de la marche de la bande de transport (3).

15. Installation de pâte avec au moins un dispositif (1) selon l'une quelconque des revendications 1 à 14, dans laquelle il est en particulier prévu que l'installation de pâte comprenne un dispositif de dispersion (23) pour la dispersion de dessus, qui est agencé de telle manière que des morceaux de pâte puissent être dispersés sans inversion des deux côtés,
et/ou dans laquelle il est en particulier prévu que l'installation de pâte comprenne deux dispositifs (1) selon l'une quelconque des revendications 1 à 14, dans laquelle les dispositifs (1) sont agencés de telle manière qu'une inversion des morceaux de pâte soit prévue entre les dispositifs (1).
